# EUROPEAN PATENT SPECIFICATION

(11) **EP 3 940 919 B1**
(45) Date of publication and mention of the grant of the patent: **21.05.2025**
(21) Application number: 20924967.1
(22) Date of filing: 22.05.2020
(51) Int. Cl.: H02J 7/00, H02J 7/35

(54) **CHARGING CONTROL METHOD, ENERGY STORAGE MODULE AND ELECTRIC EQUIPMENT**
LADESTEUERUNGSVERFAHREN, ENERGIESPEICHERMODUL UND ELEKTRISCHES GERÄT
PROCÉDÉ DE COMMANDE DE CHARGE, MODULE DE STOCKAGE D'ÉNERGIE ET ÉQUIPEMENT ÉLECTRIQUE

(43) Date of publication of application: 19.01.2022
(73) Proprietor: Huawei Digital Power Technologies Co., Ltd., Shenzhen, 518043 (CN)
(72) Inventor: TUO, Hong, Shenzhen, Guangdong 518129 (CN); YU, Hua, Shenzhen, Guangdong 518129 (CN); LAI, Jiaolong, Shenzhen, Guangdong 518129 (CN)
(74) Representative: Pfenning, Meinig & Partner mbB
(86) International application number: PCT/CN2020/091855
(87) International publication number: WO 2021/232418

(56) References cited:
- CN-A- 103 236 747
- CN-A- 106 786 490
- CN-A- 107 332 270
- CN-A- 108 832 612
- JP-A- 2006 014 526
- US-A- 5 698 964
- US-A- 5 739 667
- US-A- 6 118 254
- US-A1- 2005 189 916
- US-A1- 2010 244 783
- US-A1- 2014 306 529
- US-A1- 2017 201 098

## Description

### TECHNICAL FIELD

This application relates to the field of energy technologies, and in particular, to a charging control method, an energy storage module, and a powered device.

### BACKGROUND

Energy storage of batteries is increasingly widely used in systems such as communication backup power systems, electric cars, data centers, wind power generation systems, solar power generation systems, and energy storage power stations, and combining batteries with direct current-direct current (DC-DC) circuits is gradually becoming a trend. The DC-DC circuit has a simple structure. By combining the DC-DC circuit with the battery, a faulty battery module can be automatically isolated, different batteries can be connected in parallel for power combination, and so on. The DC-DC circuit and the battery may be combined and used as a battery module in a system or a device to which the DC-DC circuit and the battery are applied. A scenario in which the DC-DC circuit and the battery are combined may include, for example, a DC backup power scenario, a wind power generation scenario, a solar power scenario, and a dynamic load scenario. In these scenarios, because input power of an input source is limited, when a sum of battery charging power and load power is greater than maximum power of the input source, an input busbar voltage of the battery module may be unstable, causing a problem that the battery module repeatedly switches between charging and discharging.

In the prior art, redundancy configuration may be performed on the power of the input source. Through the redundancy configuration on the power of the input source, maximum input power of the input source is enabled to be greater than the sum of the battery charging power and the load power, and a margin is reserved, to ensure stability of the input busbar voltage.

However, the method in the prior art results in high hardware costs and poor adaptability to an environment.

US 6118254 describes a circuit and method for charging batteries while a power supply also powers a dynamically varying load.

US 2005/189916 describes a circuit for controlling a charging parameter provided to a rechargeable battery. The circuit includes a power control circuit configured to provide a power control signal representative of a power output level of a DC source, and a control signal generating circuit configured to reduce the charging parameter provided to the battery if the power output level exceeds a predetermined power threshold level.

US 2010/244783 describes circuits and methods to charge batteries of a portable device simultaneously with supplying power to the device for its operation, using a power source with limited maximum current, as e.g. an USB port.

US 5698964 describes an adaptive battery charger for charging batteries used in portable electronic devices. The battery charger monitors power provided from an AC adapter to the portable electronic device, and adaptively utilizes all available power from the AC adapter for charging the batteries, both when the portable electronic device is off, and when it is in use.

US 5739667 describes a control system for charging enabling efficient charging of rechargeable batteries in an electronic apparatus which charges its rechargeable batteries by using a charger circuit when driving the apparatus by using an external power source, including first detecting unit for detecting a differential value between a maximum permissible charging current allowed by the rechargeable batteries and a charging current flowing to the rechargeable batteries; second detecting unit for detecting a maximum usable current by detecting a differential value between a maximum supplyable current allowed by the external power source and the current consumption of the apparatus; third detecting unit for detecting a differential value between a maximum useable current and the charging current flowing to the rechargeable batteries; and control unit for controlling the system in accordance with the differential values detected by the first and third detecting units so that the charger circuit generates the maximum charging current within the range where the charging current flowing to the rechargeable batteries does not exceed either of the maximum permissible charging current and the maximum useable current.

US 2014/306529 describes an apparatus for charging of a rechargeable battery. The apparatus includes a rechargeable battery, a controller and a circuitry. The circuitry is operable to receive power from a power source. The circuitry is configured to provide power to the rechargeable battery and to other components. The controller is configured to control the circuitry to increase power to the rechargeable battery in response to a decrease in power consumption associated with the other components.

JP2006014526 relates to a charging control method for simultaneously charging a storage battery and powering a dynamically varying load using a fluctuating input source.

### SUMMARY

Embodiments of this application provide a charging control method, an energy storage module, and a powered device, to resolve prior-art problems of high hardware costs and poor adaptability to an environment caused by maintaining stability of an input busbar voltage of a battery. The scope of protection of the present invention is defined by the appended claims.

According to a first aspect, an embodiment of this application provides a charging control method. The method is applied to an energy storage module of a powered device, and the energy storage module includes a DC-DC unit and an energy storage unit. The powered device further includes an input source and a load, and the input source is separately connected to the energy storage module and the load, and separately supplies power to the energy storage module and the load.

A process in which the energy storage module performs charging control includes:
obtaining a sampling voltage of an input port of the DC-DC unit; determining a charging parameter of the DC-DC unit for the energy storage unit based on the sampling voltage of the input port of the DC-DC unit and a preset constant voltage of the input port of the DC-DC unit, where a sum of a charging electricity quantity reflected by the charging parameter and a charging electricity quantity of the load is equal to a maximum output electricity quantity of the input source; and after the charging parameter is determined, charging the energy storage unit by using the charging electricity quantity reflected by the charging parameter.

In the method, the energy storage module can determine a change trend of an actual voltage of the input port based on the sampling voltage of the input port of the DC-DC unit obtained in each period and the preset constant voltage, and can use the change trend to dynamically determine that the charging parameter needs to be increased or decreased, to further determine the charging parameter of the DC-DC unit for the energy storage unit in a current period, and further charge the energy storage unit by using the charging electricity quantity reflected by the charging parameter, that is, dynamically adjust the charging electricity quantity for the energy storage unit. In a scenario in which the input source is weak, the charging electricity quantity for the energy storage unit is dynamically adjusted, so that the charging electricity quantity is equal to a difference between maximum output power of the input source and load power, and the input source can always maintain the maximum output power. In addition, the charging electricity quantity is controlled to be equal to the difference between the maximum output power of the input source and the load power, so that an input voltage of the energy storage module can be stabilized, thereby avoiding a phenomenon of repeated charging and discharging of the energy storage module. In addition, in the method, the energy storage module stabilizes the input voltage based on a self-management manner of the sampling voltage of the input port, without relying on another module or adding a hardware configuration. Therefore, an increase in hardware costs can be further avoided, and coupling between the energy storage module and another module can be reduced. In addition, in the method, the energy storage module dynamically adjusts the charging electricity quantity for the energy storage unit in the self-management manner, so that real-time performance is high, thereby ensuring a balance between maximum utilization of input power and a rapid change of the load power or the power of the input source.

In a possible design, when the energy storage module charges the energy storage unit by using the charging electricity quantity reflected by the charging parameter, a difference between an input voltage of the input port of the DC-DC unit and the preset constant voltage may be maintained within a preset range based on at least one of the following:
internal resistance of the input source, line impedance between the input port of the DC-DC unit and the input source, and charging power of the energy storage module actively limited by the DC-DC unit.

In the method, when the input source always maintains the maximum output power, the difference between the input voltage of the input port of the DC-DC unit and the preset constant voltage is maintained within the preset range by using at least one of the foregoing. Therefore, the input voltage of the input port of the DC-DC unit is stabilized.

In a possible design, when the charging parameter of the DC-DC unit for the energy storage unit is determined based on the sampling voltage of the input port of the DC-DC unit and the preset constant voltage of the input port of the DC-DC unit, a voltage difference between the sampling voltage and the preset constant voltage may be first determined, and the charging parameter of the DC-DC unit for the energy storage unit may be determined based on the voltage difference.

In the method, the sampling voltage represents an actual voltage of the DC-DC unit in the current period, and as described above, the preset constant voltage represents a lower limit value of the input voltage of the DC-DC unit when the input source is weak. Therefore, based on the difference between the sampling voltage and the preset constant voltage, the DC-DC unit can determine a change trend of the input voltage of the DC-DC unit, and can use the change trend to dynamically adjust the charging electricity quantity for the energy storage unit, to keep the input voltage of the DC-DC unit stable.

In a possible design, when the charging parameter of the DC-DC unit for the energy storage unit is determined, if the voltage difference between the sampling voltage and the preset constant voltage is a positive value, the charging parameter may be determined to be greater than a charging parameter of the DC-DC unit for the energy storage unit in a previous period.

If the difference between the sampling voltage and the preset constant voltage is a positive value, it indicates that an input voltage from the input source to the energy storage module increases. Therefore, compared with the previous period, the DC-DC unit may increase the charging parameter for the energy storage unit, to increase the charging electricity quantity for the energy storage unit. The charging electricity quantity for the energy storage unit is increased, so that the input source works in an output state of a maximum current limit or a maximum power limit, that is, the input is output based on maximum power. In addition, the input voltage of the energy storage module is stable near a value of the preset constant voltage, that is, the input voltage remains stable.

In a possible design, when the charging parameter of the DC-DC unit for the energy storage unit is determined, if the voltage difference between the sampling voltage and the preset constant voltage is a negative value, the charging parameter may be determined to be greater than a charging parameter of the DC-DC unit for the energy storage unit in a previous period.

If the difference between the sampling voltage and the preset constant voltage is a negative value, it indicates that an input voltage from the input source to the energy storage module decreases. Therefore, compared with the previous period, the DC-DC unit may decrease the charging parameter for the energy storage unit, to decrease the charging electricity quantity for the energy storage unit. The charging electricity quantity for the energy storage unit is decreased, so that the input voltage remains stable. In addition, it can still be ensured that the input source performs output based on the maximum power.

In a possible design, when the charging parameter is a charging current, and when the charging parameter of the DC-DC unit for the energy storage unit is determined based on the voltage difference, a target charging current of the DC-DC unit for the energy storage unit may be determined based on the voltage difference, and the target charging current may be used as the charging parameter of the DC-DC unit for the energy storage unit.

In this possible design, the target charging current may be determined based on the voltage difference and impedance of the energy storage module.

In this possible design, a PWM duty cycle for charging the energy storage unit may be determined based on the target charging current and a sampling current of the input port of the DC-DC unit, and the PWM duty cycle may be used to charge the energy storage unit.

The sampling current of the input port of the DC-DC unit represents a current actual output current from the input source to the energy storage module, and the DC-DC unit needs to charge the energy storage unit by using the foregoing target charging current, to keep the input voltage stable. Therefore, the DC-DC unit may obtain, based on the actual sampling current and the target charging current that needs to be charged, a charging control parameter of the PWM duty cycle for charging the energy storage unit by the DC-DC. Further, the internal resistance of the input source, the line impedance between the input port of the DC-DC unit and the input source, the charging power of the energy storage module actively limited by the DC-DC unit by limiting output through voltage regulation, and the like may be used to control the DC-DC unit to charge the energy storage unit.

In a possible design, when the charging parameter is a charging voltage, and when the charging parameter of the DC-DC unit for the energy storage unit is determined based on the voltage difference, a target charging voltage of the DC-DC unit for the energy storage unit may be determined based on the voltage difference, and the target charging voltage may be used as the charging parameter of the DC-DC unit for the energy storage unit.

In this possible design, a pulse width modulation PWM duty cycle for charging the energy storage unit may be determined based on the target charging voltage and the sampling voltage of the input port of the DC-DC unit, and the PWM duty cycle may be used to charge the energy storage unit.

The voltage difference is obtained based on the actual sampling voltage and the preset constant voltage needed by the DC-DC. To keep the input voltage stable, the DC-DC unit may use the target charging voltage of the energy storage unit obtained based on the difference and the sampling voltage of the input port of the DC-DC unit to calculate and obtain the PWM duty cycle for charging the energy storage unit. In addition, the internal resistance of the input source, the line impedance between the input port of the DC-DC unit and the input source, the charging power of the energy storage module actively limited by the DC-DC unit, and the like may be used to control the DC-DC unit to charge the energy storage unit.

In a possible design, when the charging parameter is a PWM duty cycle, and when the charging parameter of the DC-DC unit for the energy storage unit is determined based on the voltage difference, a PWM duty cycle for charging the energy storage unit by the DC-DC unit may be determined based on the voltage difference, and the PWM duty cycle may be used as the charging parameter of the DC-DC unit for the energy storage unit.

In this possible design, the PWM duty cycle may be used to charge the energy storage unit.

The voltage difference is obtained based on the actual sampling voltage and the preset constant voltage needed by the DC-DC. To keep the input voltage stable, the DC-DC unit may use the difference to calculate and obtain the PWM duty cycle needed by the DC-DC. In addition, the internal resistance of the input source, the line impedance between the input port of the DC-DC unit and the input source, the charging power of the energy storage module actively limited by the DC-DC unit, and the like may be used to control the DC-DC unit to charge the energy storage unit.

In a possible design, when the energy storage unit is charged by using the charging electricity quantity reflected by the charging parameter, the energy storage unit may be charged based on closed-loop control by using the charging electricity quantity reflected by the charging parameter.

In a possible design, the preset constant voltage is a constant voltage in a preset time or a preset working condition.

In a possible design, the preset constant voltage is obtained by using a communication command indication from a host machine; or the preset constant voltage is obtained based on a preset correspondence between an energy storage unit and a preset constant voltage; or the preset constant voltage is obtained based on a preset correspondence between a real-time parameter and a preset constant voltage, where the real-time parameter includes at least one of a charging voltage, a charging current, and a charging capacity; or the preset constant voltage is a preset value.

According to a second aspect, an embodiment of this application provides an energy storage module. The energy storage module includes a DC-DC unit and an energy storage unit. The DC-DC unit is configured to supply power to the energy storage unit by using the method according to the first aspect.

In a possible design, the DC-DC unit includes a DC-DC power circuit, an auxiliary circuit, a communication circuit, and a control unit.

In a possible design, the control unit includes a sampling unit, a calculation unit, and a protection unit.

In a possible design, the auxiliary circuit includes a sampling circuit, a drive circuit, and a control circuit.

In a possible design, the energy storage unit includes a cell pack.

According to a third aspect, an embodiment of this application provides a powered device, including an input source, a load, and at least one energy storage module according to the second aspect.

According to a fourth aspect, an embodiment of this application provides a computer-readable storage medium. The computer-readable storage medium stores a computer program, and when the computer program runs, the method according to the first aspect is implemented.

According to a fifth aspect, an embodiment of this application provides a computer program product. The computer program product includes computer program code, and when the computer program code is executed by an energy storage module, the energy storage module is enabled to perform the method according to the first aspect.

### BRIEF DESCRIPTION OF DRAWINGS

FIG. 1 is a schematic diagram of a module connection of a powered device to which an embodiment of this application is applicable;
FIG. 2 is an example diagram of another module connection of a powered device to which an embodiment of this application is applicable;
FIG. 3 is a structural example diagram of an energy storage module according to an embodiment of this application;
FIG. 4 is a schematic flowchart of a charging control method according to an embodiment of this application;
FIG. 5 is a schematic flowchart of a charging control method according to an embodiment of this application; and
FIG. 6 is a schematic flowchart of a charging control method according to an embodiment of this application.

### DESCRIPTION OF EMBODIMENTS

In energy storage scenarios such as wind power generation and solar power generation in which a DC-DC circuit and a battery are combined, there may be a problem of limited input power of an input source. Using a solar power generation scenario as an example, input power of an input source is greatly affected by weather. In cloudy weather, illumination is relatively weak, and the input power of the input source is limited. In this case, a sum of battery charging power and load power is greater than maximum power of the input source. This causes an input busbar voltage of a battery module to be unstable, and consequently, the battery module repeatedly switches between charging and discharging. In the prior art, redundancy configuration on the power of the input source is used to enable maximum input power of the input source to be greater than the sum of the battery charging power and the load power. On the one hand, this manner leads to an increase in hardware costs. On the other hand, after the redundancy configuration is performed on the input source, there are higher requirements for a device installation site and power distribution, making the device less adaptable to an installation environment. In addition, in the prior art, DC-DC charging power may alternatively be adjusted in a manner of adjustment by a host machine. However, real-time performance of this manner is poor, and it is difficult to balance maximum utilization of the input power and a rapid change of the load power or the power of the input source.

Considering prior-art problems that device hardware costs are increased and adaptability to an environment is weakened due to use of a manner of performing redundancy configuration on the input source, in embodiments of this application, charging power of the battery module is dynamically adjusted in real time in a battery module self-management manner to be equal to maximum output power of the input source minus the load power, to ensure that the input busbar voltage of the battery module remains stable, so that the input source can always maintain the maximum output power. In addition, this application has high real-time performance, and can ensure a balance between the maximum utilization of the input power and the rapid change of the load power or the power of the input source.

For ease of description, a powered device is referred to as a device in the following embodiments of this application.

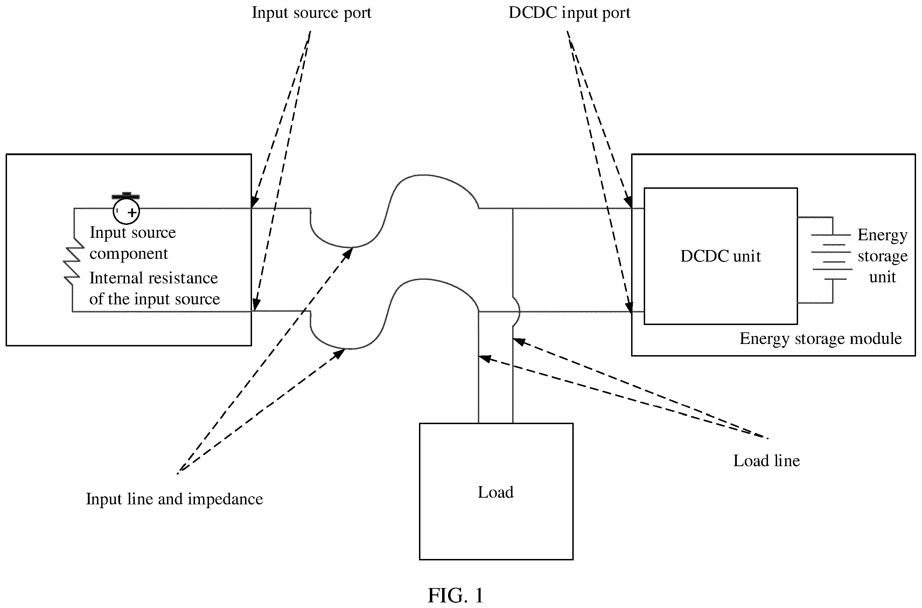

FIG. 1 is a schematic diagram of a module connection of a powered device to which an embodiment of this application is applicable. As shown in FIG. 1, an input source includes an input source component and internal resistance of the input source, and the input source outputs electric energy by using an input source port. An input line and impedance are included between the input source and an energy storage module, which are connected to a load by using a load line. The energy storage module includes a DC-DC input port, and the electric energy output by the input source is input to the energy storage module by using the DC-DC input port. The energy storage module includes a DC-DC unit, an energy storage unit, and a necessary packing material. The energy storage unit may include, for example, a cell pack. The cell pack may include single cells that are connected in series, in parallel, or in series and in parallel. The DC-DC unit is connected to the energy storage unit, and controls electric energy input of the energy storage unit.

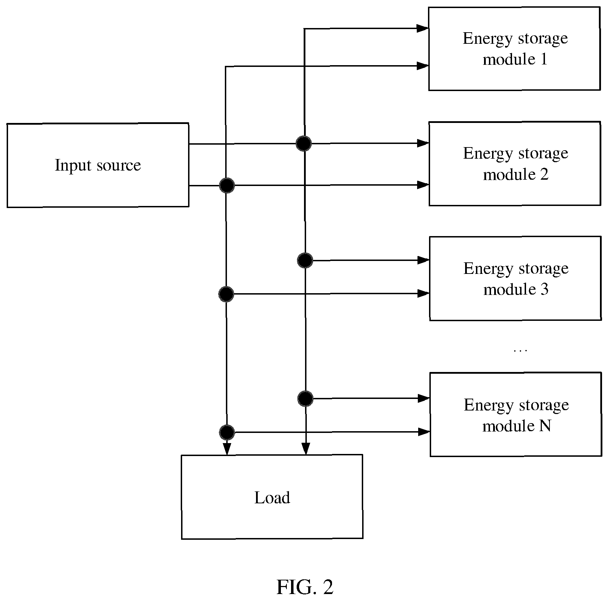

The powered device may include one energy storage module, or may include a plurality of energy storage modules. When the powered device includes one energy storage module, the input source, the energy storage module, and the load may be connected in a connection manner shown in FIG. 1. When the powered device includes a plurality of energy storage modules, the plurality of energy storage modules may be used in parallel. FIG. 2 is an example diagram of another module connection of a powered device to which an embodiment of this application is applicable. As shown in FIG. 2, one device may include a plurality of energy storage modules, and each energy storage module includes a set of energy storage unit, a DC-DC unit, and a necessary packing material. The plurality of energy storage modules are connected in parallel, and a plurality of battery modules are connected in parallel to a load of the device. An input source is connected to the plurality of energy storage modules and the load, and is configured to supply power to the plurality of battery modules and the load. The input source may be, for example, a DC source (DC power).

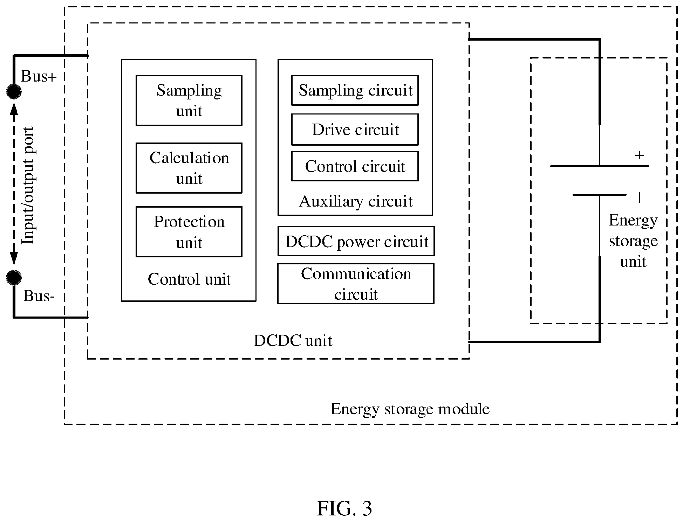

FIG. 3 is a structural example diagram of an energy storage module according to an embodiment of this application. In this embodiment of this application, a DC-DC unit may include, for example, a bidirectional DC-DC circuit, or a unidirectional DC-DC circuit that charges only a cell. The DC-DC circuit is a circuit that converts a DC power supply into a DC power supply. As illustrated in FIG. 3, the DC-DC circuit may include a DC-DC power circuit and a necessary auxiliary circuit. The auxiliary circuit may include a sampling circuit, a drive circuit, a control circuit, and the like.

In addition, refer to FIG. 3. In addition to the DC-DC power circuit and the necessary auxiliary circuit, the DC-DC unit may further include a communication circuit and a control unit. The control unit may be, for example, a microcontroller unit (MCU). The control unit may include a sampling unit, a calculation unit, a protection unit, and the like.

Before solutions of the embodiments of this application are described, terms used in the embodiments of this application are first explained.

### 1. Weak input source

In the embodiments of this application, the weak input source means that the input source can simultaneously supply power to a load and an energy storage module, but maximum output power of the input source is less than a sum of maximum rechargeable power of all energy storage modules and load power.

A weak source is relative to a strong source. When the input source is strong, the maximum output power of the input source is greater than or equal to a sum of charging power of the energy storage module and the load power.

It should be noted that, in the embodiments of this application, the charging power of the energy storage module is actual maximum rechargeable power of the energy storage module.

### 2. Input voltage of the energy storage module

In the embodiments of this application, the input voltage of the energy storage module may be an input voltage of a DC-DC unit in the energy storage module, and may be specifically a voltage of an input port of the DC-DC unit.

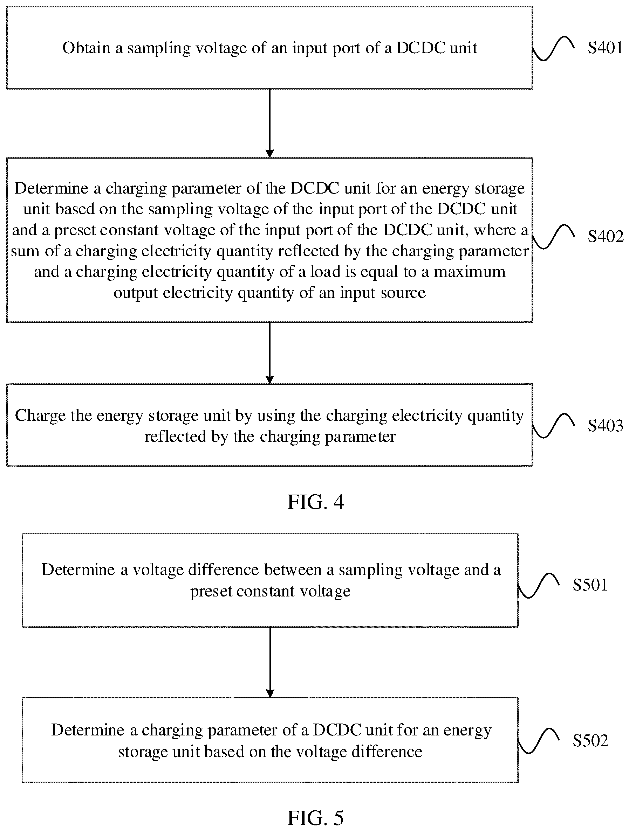

FIG. 4 is a schematic flowchart of a charging control method according to an embodiment of this application. The method may be applied to the energy storage module in the powered device shown in FIG. 1, FIG. 2, and FIG. 3, and may be specifically performed by the DC-DC unit shown in FIG. 3. As shown in FIG. 4, the method includes the following steps:

S401. Obtain a sampling voltage of an input port of the DC-DC unit.

The method in this embodiment of this application is performed by the energy storage module according to a specific processing period. A length of the processing period may be flexibly set based on an actual requirement, as long as a change of an input source or a load can be tracked in the length of the processing period. For example, for the input source or the load, the device detects, according to a specific period, whether the input source or the load changes. In this case, the processing period for performing this embodiment of this application may be less than the period for detecting whether the input source or the load changes. When the processing period is less than the period for detecting whether the input source or the load changes, it may be considered that the input source or the load remains stable in each processing period, so that the method in this embodiment of this application may be used to control an input voltage of the DC-DC unit to be stable.

Using the structure shown in FIG. 3 as an example, the sampling unit in the DC-DC unit may sample the voltage of the input port of the DC-DC unit at a specific moment, such as a start moment, of each period.

S402. Determine a charging parameter of the DC-DC unit for an energy storage unit based on the sampling voltage of the input port of the DC-DC unit and a preset constant voltage of the input port of the DC-DC unit, where a sum of a charging electricity quantity reflected by the charging parameter and a charging electricity quantity of the load is equal to a maximum output electricity quantity of the input source.

Optionally, the preset constant voltage of the input port of the DC-DC unit may be a lower limit value of the input voltage of the DC-DC unit when the input source is weak.

A change trend of an actual voltage of the input port can be determined based on the sampling voltage of the input port of the DC-DC unit obtained in each period and the preset constant voltage, and the change trend can be used to dynamically determine that the charging parameter needs to be increased or decreased, to further determine the charging parameter of the DC-DC unit for the energy storage unit in a current period.

S403. Charge the energy storage unit by using the charging electricity quantity reflected by the charging parameter.

The charging parameter of the DC-DC unit for the energy storage unit can reflect the charging electricity quantity of the DC-DC unit for the energy storage unit. The charging parameter may be, for example, a charging voltage, a charging current, a pulse width modulation (PWM) of the DC-DC unit, or the like. The charging electricity quantity may be, for example, charging power or a charging current.

In this embodiment, the change trend of the actual voltage of the input port can be determined based on the sampling voltage of the input port of the DC-DC unit obtained in each period and the preset constant voltage, and the change trend can be used to dynamically determine that the charging parameter needs to be increased or decreased, to further determine the charging parameter of the DC-DC unit for the energy storage unit in the current period, and further charge the energy storage unit by using the charging electricity quantity reflected by the charging parameter, that is, dynamically adjust the charging electricity quantity for the energy storage unit. In a scenario in which the input source is weak, the charging electricity quantity for the energy storage unit is dynamically adjusted, so that the charging electricity quantity is equal to a difference between maximum output power of the input source and load power, and the input source can always maintain the maximum output power. In addition, the charging electricity quantity is controlled to be equal to the difference between the maximum output power of the input source and the load power, so that an input voltage of the energy storage module can be stabilized, thereby avoiding a phenomenon of repeated charging and discharging of the energy storage module. In addition, in this embodiment, the energy storage module stabilizes the input voltage based on a self-management manner of the sampling voltage of the input port, without relying on another module or adding a hardware configuration. Therefore, in this embodiment, an increase in hardware costs can be avoided, and coupling between the energy storage module and another module can be reduced. In addition, in this embodiment, the energy storage module dynamically adjusts the charging electricity quantity for the energy storage unit in the self-management manner, so that real-time performance is high, thereby ensuring a balance between maximum utilization of input power and a rapid change of the load power or the power of the input source.

It should be noted that the stable input voltage of the energy storage module in this embodiment of this application means that the input voltage remains relatively stable. For example, when the input source is continuously weak, the input voltage fluctuates around the preset constant voltage within a range of an upward preset value and within a range of a downward preset value, and it may be considered that the input voltage of the energy storage module remains stable. For example, the preset value may be, for example, 5% or 1%. It should be understood that 5% and 1% herein are merely examples of preset values in this application, and are not intended to limit the solutions of this application.

The foregoing embodiment is performed when the input source is weak. If the input source is currently not weak, a highest voltage of the energy storage module may be determined based on an output voltage, an output current, line impedance, and the like of the input source.

In an optional implementation, when the DC-DC unit determines the charging parameter and charges the energy storage unit by using the charging electricity quantity reflected by the charging parameter, the input voltage of the energy storage module can be stabilized and the input source can always maintain the maximum output power based on at least one of the following:
internal resistance of the input source, line impedance between the input port of the DC-DC unit and the input source, and charging power of the energy storage module actively limited by the DC-DC unit.

For the internal resistance of the input source and the line impedance between the input port of the DC-DC unit and the input source, refer to the example in FIG. 2.

By using the internal resistance of the input source, the line impedance, or the charging power of the energy storage module actively limited by the DC-DC unit, the input source can be enabled to always maintain the maximum output power, and a difference between the input voltage of the input port of the DC-DC unit and the preset constant voltage can be maintained within the preset range. Therefore, the input voltage of the energy storage module remains stable.

By using the charging power of the energy storage module actively limited by the DC-DC unit, an output electricity quantity of the input source does not need to be adjusted, and the DC-DC unit adjusts the charging electricity quantity for the energy storage unit based on the charging parameter, so that the input voltage of the energy storage module remains stable, and the input source maintains the maximum output power.

As described above, the charging parameter may be a charging voltage, a charging current, or a PWM duty cycle of the DC-DC unit.

The duty cycle refers to a ratio of a power-on time to a total time in one pulse cycle. For example, in the telecommunications field, a duty cycle of a pulse sequence with a pulse width of 1 µs and a signal period of 4 µs is 0.25.

When being performed by using one of the foregoing three charging parameters, charging control may be separately performed in the following several cases.

In one case, if the charging parameter is a charging voltage, when charging the energy storage unit in step S403, the DC-DC unit may first control the voltage to be the charging voltage determined in step S402, and then control the PWM duty cycle based on the charging voltage, to charge the energy storage unit by using an electricity quantity reflected by the charging voltage.

In another case, if the charging parameter is a charging current, when charging the energy storage unit in step S403, the DC-DC unit may first control the current to be the charging current determined in step S402, and then control the PWM duty cycle based on the charging current, to charge the energy storage unit by using an electricity quantity reflected by the charging current.

In still another case, if the charging parameter is a PWM duty cycle, when charging the energy storage unit in step S403, the DC-DC unit may use the charging parameter to control the PWM duty cycle, to charge the energy storage unit by using a charging electricity quantity reflected by the PWM duty cycle.

In the foregoing three cases, the DC-DC unit charges, by controlling the PWM duty cycle, the energy storage unit by using the charging electricity quantity reflected by the charging parameter. Specifically, the DC-DC unit may control the charging current and the charging power for the energy storage unit by controlling the PWM duty cycle, to charge the energy storage unit by using the charging electricity quantity reflected by the charging parameter.

When the energy storage unit is charged by using the charging electricity quantity reflected by the charging parameter, in an optional implementation, the energy storage unit may be charged based on closed-loop control by using the charging electricity quantity reflected by the charging parameter.

Optionally, the closed-loop control may be a closed-loop control algorithm. The closed-loop control algorithm may be, for example, a proportional-integral-derivative (PID) algorithm, but is not limited thereto. A specific closed-loop control manner is not specifically limited by a limiting scheme in this application.

The foregoing embodiment describes a process of determining the charging parameter and charging the energy storage unit by using the charging electricity quantity reflected by the charging parameter. The following describes an optional manner for determining the charging parameter based on the sampling voltage and the preset constant voltage in step S402.

FIG. 5 is a schematic flowchart of a charging control method according to an embodiment of this application. As shown in FIG. 5, an optional manner of step S402 includes the following steps:
S501. Determine a voltage difference between the sampling voltage and the preset constant voltage.

The voltage difference between the sampling voltage and the preset constant voltage is a difference obtained by subtracting the preset constant voltage from the sampling voltage.

In each processing period, after obtaining the sampling voltage, the DC-DC unit subtracts the preset constant voltage from the sampling voltage, and performs a subsequent processing process.

S502. Determine the charging parameter of the DC-DC unit for the energy storage unit based on the voltage difference.

In this embodiment, the sampling voltage represents an actual voltage of the DC-DC unit in the current period, and as described above, the preset constant voltage represents a lower limit value of the input voltage of the DC-DC unit when the input source is weak. Therefore, based on the difference between the sampling voltage and the preset constant voltage, the DC-DC unit can determine a change trend of the input voltage of the DC-DC unit, and can use the change trend to dynamically adjust the charging electricity quantity for the energy storage unit, to keep the input voltage of the DC-DC unit stable.

The following describes an optional manner for determining the charging parameter of the DC-DC unit for the energy storage unit based on the voltage difference in step S502.

The difference between the sampling voltage and the preset constant voltage may be a positive value or a negative value. The following processing manners may be respectively used in cases of a positive value and a negative value.

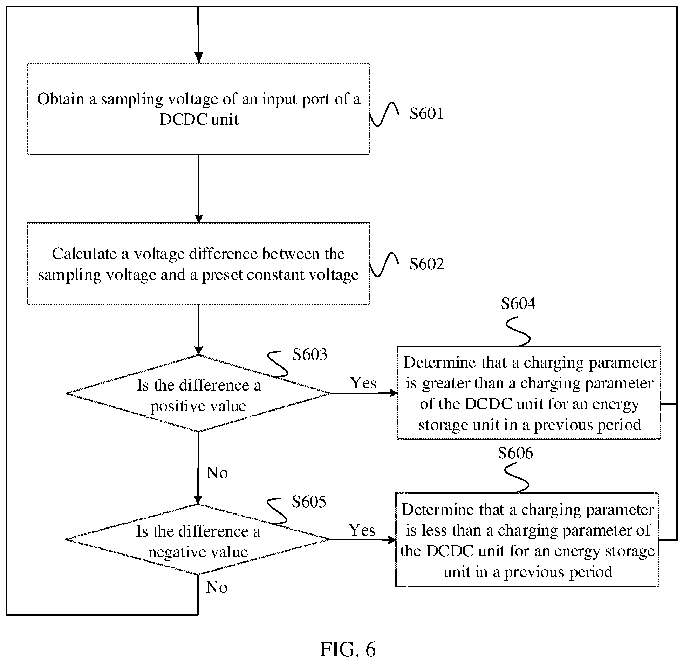

FIG. 6 is a schematic flowchart of a charging control method according to an embodiment of this application. As shown in FIG. 6, a procedure of determining the charging parameter by using the difference between the sampling voltage and the preset constant voltage includes the following steps:
S601. Obtain the sampling voltage of the input port of the DC-DC unit.
   A processing process in this step is the same as the processing process in step S401. For the processing process, refer to the processing in step S401. Details are not described herein.
S602. Calculate the voltage difference between the sampling voltage and the preset constant voltage.
S603. Determine whether the difference is a positive value, and if yes, perform step S604; or if no, perform step S605.
S604. Determine that the charging parameter is greater than a charging parameter of the DC-DC unit for the energy storage unit in a previous period.

If the difference between the sampling voltage and the preset constant voltage is a positive value, it indicates that an input voltage from the input source to the energy storage module increases. Therefore, compared with the previous period, the DC-DC unit may increase the charging parameter for the energy storage unit, to increase the charging electricity quantity for the energy storage unit. The charging electricity quantity for the energy storage unit is increased, so that the input source works in an output state of a maximum current limit or a maximum power limit, that is, the input is output based on maximum power. In addition, the input voltage of the energy storage module is stable near a value of the preset constant voltage, that is, the input voltage remains stable.

That the input voltage is stable near the value of the preset constant voltage may specifically mean that the input voltage is within a range of an upward preset value of the preset constant voltage and within a range of a downward preset value of the preset constant voltage, as described in the foregoing embodiment.

S605. Determine whether the difference is a negative value, and if yes, perform step S606; or otherwise, continue to perform step S601.

When the condition is not met, it indicates that the sampling voltage is the same as the preset constant voltage. Therefore, the DC-DC unit may continue to use the charging parameter in the previous period to charge the energy storage unit. Therefore, the charging parameter may remain consistent with the charging parameter in the previous period. Therefore, in a next period, the DC-DC unit continues to perform step S601.

S606. Determine that the charging parameter is less than a charging parameter of the DC-DC unit for the energy storage unit in a previous period.

If the difference between the sampling voltage and the preset constant voltage is a negative value, it indicates that an input voltage from the input source to the energy storage module decreases. Therefore, compared with the previous period, the DC-DC unit may decrease the charging parameter for the energy storage unit, to decrease the charging electricity quantity for the energy storage unit. The charging electricity quantity for the energy storage unit is decreased, so that the input voltage remains stable. In addition, it can still be ensured that the input source performs output based on the maximum power.

The following describes a processing process in which the DC-DC unit determines the value of the charging parameter based on the difference and charges the energy storage unit based on the charging parameter.

Optionally, the charging parameter determined by the DC-DC unit based on the difference may be a charging current, a charging voltage, or a PWM duty cycle. The following separately describes processing processes in the several cases.

In a first optional manner, the DC-DC unit first determines a target charging current of the DC-DC unit for the energy storage unit based on the voltage difference, and uses the target charging current as the charging parameter. Then, the DC-DC unit charges the energy storage unit by using the charging electricity quantity reflected by the charging parameter.

Optionally, the DC-DC unit may determine the target charging current based on the voltage difference and impedance of the energy storage module.

The impedance of the energy storage module may be virtual internal resistance of the energy storage module.

Optionally, the DC-DC unit may calculate a ratio of the voltage difference to the impedance of the energy storage module. The ratio is a current adjustment amount of the current period compared with the previous period. The target charging current of the DC-DC circuit for the energy storage unit in the current period may be obtained by adding the current adjustment amount to a charging current of the previous period.

As described above, the voltage difference may be a positive value or a negative value. When the voltage difference is a positive value, the current adjustment amount calculated by using the foregoing method is a positive value, and after the current adjustment amount is added to the charging current of the previous period, the obtained target charging current is greater than the charging current of the previous period. When the voltage difference is a negative value, the current adjustment amount calculated by using the foregoing method is a negative value, and after the current adjustment amount is added to the charging current of the previous period, the obtained target charging current is less than the charging current of the previous period.

After obtaining the target charging current, the DC-DC unit may charge the energy storage unit based on the target charging current according to the following process.

Optionally, the DC-DC unit may determine, based on the target charging current and a sampling current of the input port of the DC-DC unit, a PWM duty cycle for charging the energy storage unit, and use the PWM duty cycle to charge the energy storage unit.

For example, a sampling time of the sampling current of the input port of the DC-DC unit may be consistent with a sampling time of the foregoing sampling voltage. For example, the sampling current and the sampling voltage are both collected at a start moment of each period.

The sampling current of the input port of the DC-DC unit represents a current actual output current from the input source to the energy storage module, and the DC-DC unit needs to charge the energy storage unit by using the foregoing target charging current, to keep the input voltage stable. Therefore, the DC-DC unit may obtain, based on the actual sampling current and the target charging current that needs to be charged, the PWM duty cycle for charging the energy storage unit by the DC-DC. Further, the internal resistance of the input source, the line impedance between the input port of the DC-DC unit and the input source, the charging power of the energy storage module actively limited by the DC-DC unit, and the like may be used to control the DC-DC unit to charge the energy storage unit.

In a second optional manner, the DC-DC unit first determines a target charging voltage of the DC-DC unit for the energy storage unit based on the voltage difference, and uses the target charging voltage as the charging parameter. Then, the DC-DC unit charges the energy storage unit by using the charging electricity quantity reflected by the charging parameter.

After obtaining the target charging voltage, the DC-DC unit may charge the energy storage unit based on the target charging voltage according to the following process.

Optionally, the DC-DC unit may determine, based on the target charging voltage and the sampling voltage of the input port of the DC-DC unit, a PWM duty cycle for charging the energy storage unit, and use the PWM duty cycle to charge the energy storage unit.

The voltage difference is obtained based on the actual sampling voltage and the preset constant voltage needed by the DC-DC. To keep the input voltage stable, the DC-DC unit may use the target charging voltage of the energy storage unit obtained based on the difference and the sampling voltage of the input port of the DC-DC unit to calculate and obtain the PWM duty cycle for charging the energy storage unit. In addition, the internal resistance of the input source, the line impedance between the input port of the DC-DC unit and the input source, the charging power of the energy storage module actively limited by the DC-DC unit, and the like may be used to control the DC-DC unit to charge the energy storage unit.

In a third optional manner, the DC-DC unit may calculate, based on the voltage difference of the input port, a PWM duty cycle for charging the energy storage unit by the DC-DC unit, and use the PWM duty cycle as the charging parameter. Then, the DC-DC unit charges the energy storage unit by using the charging electricity quantity reflected by the charging parameter.

The voltage difference is obtained based on the actual sampling voltage and the preset constant voltage needed by the DC-DC. To keep the input voltage stable, the DC-DC unit may use the difference to calculate and obtain the PWM duty cycle needed by the DC-DC. In addition, the internal resistance of the input source, the line impedance between the input port of the DC-DC unit and the input source, the charging power of the energy storage module actively limited by the DC-DC unit, and the like may be used to control the DC-DC unit to charge the energy storage unit.

In the foregoing embodiments, the preset constant voltage may be a constant voltage in a preset time or a preset working condition.

Before the preset constant voltage is used to dynamically adjust the charging electricity quantity for the energy storage unit, the preset constant voltage may be obtained in any one of the following manners.

In a first manner, the preset constant voltage may be obtained by using a communication command indication from a host machine.

In this manner, the host machine may send indication information to the powered device, and the indication information is used to indicate the preset constant voltage. Correspondingly, the powered device receives the indication information from the host machine.

The host machine may be a device communicatively connected to the powered device. For example, the host machine may be an upstream device that controls, manages, or maintains the powered device.

After the powered device receives the indication information from the target device, the DC-DC unit may learn of the preset constant voltage indicated by the indication information. When a next period is entered, the DC-DC unit performs the processing process in the foregoing embodiment based on the indicated preset constant voltage.

The host machine may send the indication information to the powered device when the preset constant voltage set in the host machine changes.

In a second manner, the preset constant voltage is obtained based on a preset relationship between an energy storage unit and a preset constant voltage.

Optionally, the powered device may prestore or obtain the preset relationship between an energy storage unit and a constant voltage from a device such as the host machine, and search for, based on the mapping relationship, a preset constant voltage corresponding to the energy storage unit, to perform charging control on the energy storage unit by using the preset constant voltage.

In a third manner, the preset constant voltage is obtained based on a preset correspondence between a real-time parameter and a preset constant voltage.

The real-time parameter includes at least one of a charging voltage, a charging current, and a charging capacity.

Optionally, the powered device may prestore or obtain the preset correspondence between a real-time parameter and a preset constant voltage, and a current real-time charging voltage, current, and capacity value from a device such as the host machine, and further find the preset constant voltage based on the preset correspondence between a real-time parameter and a preset constant voltage, and the current real-time charging voltage, current, and capacity value.

In a fourth manner, the preset constant voltage is a preset fixed value.

Optionally, an embodiment of this application further provides a readable storage medium. The storage medium stores instructions. When the instructions run on an energy storage module, the energy storage module is enabled to perform the methods in the embodiments shown in FIG. 4 to FIG. 6.

An embodiment of this application further provides a program product. The program product includes a computer program, and the computer program is stored in a storage medium. At least one control unit may read the computer program from the storage medium, and when executing the computer program, the at least one control unit may perform the methods in the embodiments shown in FIG. 4 to FIG. 6.

In the embodiments of this application, "at least one" means one or more, and "a plurality of" means two or more. "and/or" describes an association relationship of associated objects, and indicates that there may be three relationships. For example, A and/or B may indicate a case in which only A exists, both A and B exist, and only B exists, where A and B may be singular or complex. The character "/" generally indicates an "or" relationship between the associated objects. In a formula, the character "/" indicates a "division" relationship between the associated objects. "At least one of the following" or a similar expression refers to any combination of these items, including a single item or any combination of a plurality of items. For example, at least one of a, b, or c may represent a, b, c, a-b, a-c, b-c, or a-b-c, where a, b, and c may be singular or plural.

It may be understood that various numeric numbers in the embodiments of this application are merely for ease of description and are not intended to limit the scope of the embodiments of this application.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of this application.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention, which is defined by the appended claims.

## Claims

1. A charging control method, wherein the method is applied to an energy storage module of a powered device, and the energy storage module comprises a direct current-direct current (DC-DC) unit and an energy storage unit; the powered device further comprises an input source and a load, and the input source is separately connected to the energy storage module and the load, and separately supplies power to the energy storage module and the load, and wherein the input power provided by the input source varies and the method is performed when the input source is weak, wherein when the input source is weak maximum output power of the input source is less than a sum of maximum rechargeable power of the energy storage modules and load power; and
the method comprises:
obtaining (S401, S601) a sampling voltage of an input port of the DC-DC unit at a start moment of each period of a plurality of processing periods, wherein the length of each processing period is set such that it may be considered that the input source or the load remains stable in each processing period;
determining (S402) a charging parameter of the DC-DC unit for the energy storage unit based on the sampling voltage of the input port of the DC-DC unit and a preset constant voltage of the input port of the DC-DC unit, wherein a sum of a charging electricity quantity reflected by the charging parameter and a charging electricity quantity of the load is equal to a maximum output electricity quantity of the input source; and
charging (S403) the energy storage unit by using the charging electricity quantity reflected by the charging parameter;
**characterized in that** the determining a charging parameter of the DC-DC unit comprises:
determining a change trend of the input voltage of the DC-DC unit based on a difference between the sampling voltage obtained in each period and the preset constant voltage; and
using the determined change trend to dynamically determine that the charging parameter needs to be increased or decreased.

2. The method according to claim 1, wherein when the energy storage unit is charged by using the charging electricity quantity reflected by the charging parameter, a difference between an input voltage of the input port of the DC-DC unit and the preset constant voltage is maintained within a preset range based on at least one of the following:
internal resistance of the input source, line impedance between the input port of the DC-DC unit and the input source, and charging power of the energy storage module actively limited by the DC-DC unit.

3. The method according to claim 1 or 2, wherein the determining a charging parameter of the DC-DC unit for the energy storage unit based on the sampling voltage of the input port of the DC-DC unit and a preset constant voltage of the input port of the DC-DC unit comprises:
determining (S501) a voltage difference between the sampling voltage and the preset constant voltage; and
determining (S502) the charging parameter of the DC-DC unit for the energy storage unit based on the voltage difference.

4. The method according to claim 3, wherein the determining (S502) the charging parameter of the DC-DC unit for the energy storage unit based on the voltage difference comprises:
if the voltage difference between the sampling voltage and the preset constant voltage is a positive value, determining (S604) that the charging parameter is greater than a charging parameter of the DC-DC unit for the energy storage unit in a previous period.

5. The method according to claim 3, wherein the determining (S502) the charging parameter of the DC-DC unit for the energy storage unit based on the voltage difference comprises:
if the voltage difference between the sampling voltage and the preset constant voltage is a negative value, determining (S604) that the charging parameter is greater than a charging parameter of the DC-DC unit for the energy storage unit in a previous period.

6. The method according to any one of claims 3 to 5, wherein the determining (S502) the charging parameter of the DC-DC unit for the energy storage unit based on the voltage difference comprises:
determining a target charging current of the DC-DC unit for the energy storage unit based on the voltage difference; and
using the target charging current as the charging parameter of the DC-DC unit for the energy storage unit.

7. The method according to claim 6, wherein the determining a target charging current of the DC-DC unit for the energy storage unit based on the voltage difference comprises:
determining the target charging current based on the voltage difference and impedance of the energy storage module.

8. The method according to claim 6 or 7, wherein the charging (S403) the energy storage unit by using the charging electricity quantity reflected by the charging parameter comprises:
determining, based on the target charging current and a sampling current of the input port of the DC-DC unit, a pulse width modulation PWM duty cycle for charging the energy storage unit; and
charging the energy storage unit by using the PWM duty cycle.

9. The method according to any one of claims 3 to 5, wherein the determining (S502) the charging parameter of the DC-DC unit for the energy storage unit based on the voltage difference comprises:
determining a target charging voltage of the DC-DC unit for the energy storage unit based on the voltage difference; and
using the target charging voltage as the charging parameter of the DC-DC unit for the energy storage unit.

10. The method according to claim 9, wherein the (S403) charging the energy storage unit by using the charging electricity quantity reflected by the charging parameter comprises:
determining, based on the target charging voltage and the sampling voltage of the input port of the DC-DC unit, a pulse width modulation PWM duty cycle for charging the energy storage unit; and
charging the energy storage unit by using the PWM duty cycle.

11. The method according to any one of claims 3 to 5, wherein the determining (S502) the charging parameter of the DC-DC unit for the energy storage unit based on the voltage difference comprises:
determining, based on the voltage difference, a PWM duty cycle for charging the energy storage unit by the DC-DC unit; and
using the PWM duty cycle as the charging parameter of the DC-DC unit for the energy storage unit.

12. The method according to claim 11, wherein the charging (S403) the energy storage unit by using the charging electricity quantity reflected by the charging parameter comprises:
charging the energy storage unit by using the PWM duty cycle.

13. The method according to any one of claims 1 to 12, wherein the charging (S403) the energy storage unit by using the charging electricity quantity reflected by the charging parameter comprises:
charging, based on closed-loop control, the energy storage unit by using the charging electricity quantity reflected by the charging parameter.

14. An energy storage module, comprising a direct current-direct current (DC-DC) unit and an energy storage unit, wherein the DC-DC unit is configured to supply power to the energy storage unit by using the method according to any one of claims 1 to 13.

15. A powered device, comprising an input source, a load, and at least one energy storage module according to claim 14.

## Patentansprüche

1. Ladesteuerungsverfahren, wobei das Verfahren auf ein Energiespeichermodul einer angetriebenen Vorrichtung angewendet wird und das Energiespeichermodul eine Gleichstrom-Gleichstrom-Einheit (DC-DC-Einheit) und eine Energiespeichereinheit umfasst; die angetriebene Vorrichtung ferner eine Eingangsquelle und eine Last umfasst und die Eingangsquelle getrennt mit dem Energiespeichermodul und der Last verbunden ist und das Energiespeichermodul und die Last getrennt mit Leistung versorgt und wobei die Eingangsleistung, die durch die Eingangsquelle bereitgestellt wird, variiert und das Verfahren durchgeführt wird, wenn die Eingangsquelle schwach ist, wobei, wenn die Eingangsquelle schwach ist, eine maximale Ausgangsleistung der Eingangsquelle geringer als eine Summe aus maximal wiederaufladbarer Leistung der Energiespeichermodule und der Lastleistung ist; und
das Verfahren Folgendes umfasst:
Erlangen (S401, S601) einer Abtastspannung eines Eingangsanschlusses der DC-DC-Einheit zu einem Startzeitpunkt jedes Zeitraums einer Vielzahl von Verarbeitungszeiträumen, wobei die Länge jedes Verarbeitungszeitraums derart eingestellt ist, dass davon auszugehen ist, dass die Eingangsquelle oder die Last in jedem Verarbeitungszeitraum stabil bleibt;
Bestimmen (S402) eines Ladeparameters der DC-DC-Einheit für die Energiespeichereinheit basierend auf der Abtastspannung des Eingangsanschlusses der DC-DC-Einheit und einer voreingestellten konstanten Spannung des Eingangsanschlusses der DC-DC-Einheit, wobei eine Summe einer Ladeelektrizitätsmenge, die durch den Ladeparameter wiedergegeben wird, und eine Ladeelektrizitätsmenge der Last gleich einer maximalen Ausgangselektrizitätsmenge der Eingangsquelle ist; und
Laden (S403) der Energiespeichereinheit unter Verwendung der Ladeelektrizitätsmenge, die durch den Ladeparameter wiedergegeben wird;
**dadurch gekennzeichnet, dass** das Bestimmen eines Ladeparameters der DC-DC-Einheit Folgendes umfasst:
Bestimmen eines Änderungstrends der Eingangsspannung der DC-DC-Einheit basierend auf einer Differenz zwischen der Abtastspannung, die in jedem Zeitraum erlangt wird, und der voreingestellten konstanten Spannung; und
Verwenden des bestimmten Änderungstrends, um dynamisch zu bestimmen, dass der Ladeparameter erhöht oder verringert werden muss.

2. Verfahren nach Anspruch 1, wobei, wenn die Energiespeichereinheit unter Verwendung der Ladeelektrizitätsmenge, die durch den Ladeparameter wiedergegeben wird, geladen wird, eine Differenz zwischen einer Eingangsspannung des Eingangsanschlusses der DC-DC-Einheit und der voreingestellten konstanten Spannung basierend auf mindestens einem der Folgenden innerhalb eines voreingestellten Bereichs gehalten wird:
Innenwiderstand der Eingangsquelle, Leitungsimpedanz zwischen dem Eingangsanschluss der DC-DC-Einheit und der Eingangsquelle und Ladeleistung des Energiespeichermoduls, die aktiv durch die DC-DC-Einheit begrenzt wird.

3. Verfahren nach Anspruch 1 oder 2, wobei das Bestimmen eines Ladeparameters der DC-DC-Einheit für die Energiespeichereinheit basierend auf der Abtastspannung des Eingangsanschlusses der DC-DC-Einheit und einer voreingestellten konstanten Spannung des Eingangsanschlusses der DC-DC-Einheit Folgendes umfasst:
Bestimmen (S501) einer Spannungsdifferenz zwischen der Abtastspannung und der voreingestellten konstanten Spannung; und
Bestimmen (S502) des Ladeparameters der DC-DC-Einheit für die Energiespeichereinheit basierend auf der Spannungsdifferenz.

4. Verfahren nach Anspruch 3, wobei das Bestimmen (S502) des Ladeparameters der DC-DC-Einheit für die Energiespeichereinheit basierend auf der Spannungsdifferenz Folgendes umfasst:
wenn die Spannungsdifferenz zwischen der Abtastspannung und der voreingestellten konstanten Spannung ein positiver Wert ist, Bestimmen (S604), dass der Ladeparameter größer als ein Ladeparameter der DC-DC-Einheit für die Energiespeichereinheit in einem vorherigen Zeitraum ist.

5. Verfahren nach Anspruch 3, wobei das Bestimmen (S502) des Ladeparameters der DC-DC-Einheit für die Energiespeichereinheit basierend auf der Spannungsdifferenz Folgendes umfasst:
wenn die Spannungsdifferenz zwischen der Abtastspannung und der voreingestellten konstanten Spannung ein negativer Wert ist, Bestimmen (S604), dass der Ladeparameter größer als ein Ladeparameter der DC-DC-Einheit für die Energiespeichereinheit in einem vorherigen Zeitraum ist.

6. Verfahren nach einem der Ansprüche 3 bis 5, wobei das Bestimmen (S502) des Ladeparameters der DC-DC-Einheit für die Energiespeichereinheit basierend auf der Spannungsdifferenz Folgendes umfasst:
Bestimmen eines Zielladestroms der DC-DC-Einheit für die Energiespeichereinheit basierend auf der Spannungsdifferenz; und
Verwenden des Zielladestroms als den Ladeparameter der DC-DC-Einheit für die Energiespeichereinheit.

7. Verfahren nach Anspruch 6, wobei das Bestimmen eines Zielladestroms der DC-DC-Einheit für die Energiespeichereinheit basierend auf der Spannungsdifferenz Folgendes umfasst:
Bestimmen des Zielladestroms basierend auf der Spannungsdifferenz und der Impedanz des Energiespeichermoduls.

8. Verfahren nach Anspruch 6 oder 7, wobei das Laden (S403) der Energiespeichereinheit unter Verwendung der Ladeelektrizitätsmenge, die durch den Ladeparameter wiedergegeben wird, Folgendes umfasst:
Bestimmen, basierend auf dem Zielladestrom und einem Abtaststrom des Eingangsanschlusses der DC-DC-Einheit, eines Pulsweitenmodulations-Arbeitszyklus, PWM-Arbeitszyklus, zum Laden der Energiespeichereinheit; und
Laden der Energiespeichereinheit unter Verwendung des PWM-Arbeitszyklus.

9. Verfahren nach einem der Ansprüche 3 bis 5, wobei das Bestimmen (S502) des Ladeparameters der DC-DC-Einheit für die Energiespeichereinheit basierend auf der Spannungsdifferenz Folgendes umfasst:
Bestimmen einer Zielladespannung der DC-DC-Einheit für die Energiespeichereinheit basierend auf der Spannungsdifferenz; und
Verwenden der Zielladespannung als den Ladeparameter der DC-DC-Einheit für die Energiespeichereinheit.

10. Verfahren nach Anspruch 9, wobei das Laden (S403) der Energiespeichereinheit unter Verwendung der Ladeelektrizitätsmenge, die durch den Ladeparameter wiedergegeben wird, Folgendes umfasst:
Bestimmen, basierend auf der Zielladespannung und der Abtastspannung des Eingangsanschlusses der DC-DC-Einheit, eines Pulsweitenmodulations-Arbeitszyklus, PWM-Arbeitszyklus, zum Laden der Energiespeichereinheit; und
Laden der Energiespeichereinheit unter Verwendung des PWM-Arbeitszyklus.

11. Verfahren nach einem der Ansprüche 3 bis 5, wobei das Bestimmen (S502) des Ladeparameters der DC-DC-Einheit für die Energiespeichereinheit basierend auf der Spannungsdifferenz Folgendes umfasst:
Bestimmen, basierend auf der Spannungsdifferenz, eines PWM-Arbeitszyklus zum Laden der Energiespeichereinheit durch die DC-DC-Einheit; und
Verwenden des PWM-Arbeitszyklus als den Ladeparameter der DC-DC-Einheit für die Energiespeichereinheit.

12. Verfahren nach Anspruch 11, wobei das Laden (S403) der Energiespeichereinheit unter Verwendung der Ladeelektrizitätsmenge, die durch den Ladeparameter wiedergegeben wird, Folgendes umfasst:
Laden der Energiespeichereinheit unter Verwendung des PWM-Arbeitszyklus.

13. Verfahren nach einem der Ansprüche 1 bis 12, wobei das Laden (S403) der Energiespeichereinheit unter Verwendung der Ladeelektrizitätsmenge, die durch den Ladeparameter wiedergegeben wird, Folgendes umfasst:
Laden, basierend auf einem geschlossenen Regelkreis, der Energiespeichereinheit unter Verwendung der Ladeelektrizitätsmenge, die durch den Ladeparameter wiedergegeben wird.

14. Energiespeichermodul, umfassend eine Gleichstrom-Gleichstrom-Einheit (DC-DC-Einheit) und eine Energiespeichereinheit, wobei die DC-DC-Einheit dazu konfiguriert ist, die Energiespeichereinheit unter Verwendung des Verfahrens nach einem der Ansprüche 1 bis 13 mit Strom zu versorgen.

15. Angetriebene Vorrichtung, umfassend eine Eingangsquelle, eine Last und mindestens ein Energiespeichermodul nach Anspruch 14.

## Revendications

1. Procédé de commande de charge, dans lequel le procédé est appliqué à un module de stockage d'énergie d'un dispositif alimenté, et le module de stockage d'énergie comprend une unité courant continu-courant continu (CC-CC) et une unité de stockage d'énergie ; le dispositif alimenté comprend également une source d'entrée et une charge, et la source d'entrée est connectée séparément au module de stockage d'énergie et à la charge, et fournit séparément de l'énergie au module de stockage d'énergie et à la charge, et dans lequel la puissance d'entrée fournie par la source d'entrée varie et le procédé est réalisé lorsque la source d'entrée est faible, dans lequel lorsque la source d'entrée est faible, la puissance de sortie maximale de la source d'entrée est inférieure à une somme de la puissance rechargeable maximale des modules de stockage d'énergie et de la puissance de charge ; et
le procédé comprend :
l'obtention (S401, S601) d'une tension d'échantillonnage d'un port d'entrée de l'unité CC-CC à un instant de début de chaque période d'une pluralité de périodes de traitement, dans lequel la longueur de chaque période de traitement est définie de telle sorte qu'il puisse être considéré que la source d'entrée ou la charge reste stable dans chaque période de traitement ;
la détermination (S402) d'un paramètre de charge de l'unité CC-CC pour l'unité de stockage d'énergie sur la base de la tension d'échantillonnage du port d'entrée de l'unité CC-CC et d'une tension constante prédéfinie du port d'entrée de l'unité CC-CC, dans lequel une somme d'une quantité d'électricité de charge reflétée par le paramètre de charge et d'une quantité d'électricité de charge de la charge est égale à une quantité d'électricité de sortie maximale de la source d'entrée ; et
la charge (S403) de l'unité de stockage d'énergie à l'aide de la quantité d'électricité de charge reflétée par le paramètre de charge ;
**caractérisé en ce que** la détermination d'un paramètre de charge de l'unité CC-CC comprend :
la détermination d'une tendance de changement de la tension d'entrée de l'unité CC-CC sur la base d'une différence entre la tension d'échantillonnage obtenue à chaque période et la tension constante prédéfinie ; et
à l'aide de la tendance de changement déterminée pour déterminer dynamiquement que le paramètre de charge doit être augmenté ou diminué.

2. Procédé selon la revendication 1, dans lequel, lorsque l'unité de stockage d'énergie est chargée à l'aide de la quantité d'électricité de charge reflétée par le paramètre de charge, une différence entre une tension d'entrée du port d'entrée de l'unité CC-CC et la tension constante prédéfinie est maintenue dans une plage prédéfinie sur la base d'au moins l'un des éléments suivants :
la résistance interne de la source d'entrée, l'impédance de ligne entre le port d'entrée de l'unité CC-CC et la source d'entrée, et la puissance de charge du module de stockage d'énergie activement limitée par l'unité CC-CC.

3. Procédé selon la revendication 1 ou 2, dans lequel la détermination d'un paramètre de charge de l'unité CC-CC pour l'unité de stockage d'énergie sur la base de la tension d'échantillonnage du port d'entrée de l'unité CC-CC et d'une tension constante prédéfinie du port d'entrée de l'unité CC-CC comprend :
la détermination (S501) d'une différence de tension entre la tension d'échantillonnage et la tension constante prédéfinie ; et
la détermination (S502) du paramètre de charge de l'unité CC-CC pour l'unité de stockage d'énergie sur la base de la différence de tension.

4. Procédé selon la revendication 3, dans lequel la détermination (S502) du paramètre de charge de l'unité CC-CC pour l'unité de stockage d'énergie sur la base de la différence de tension comprend :
si la différence de tension entre la tension d'échantillonnage et la tension constante prédéfinie est une valeur positive, la détermination (S604) du fait que le paramètre de charge est supérieur à un paramètre de charge de l'unité CC-CC pour l'unité de stockage d'énergie dans une période précédente.

5. Procédé selon la revendication 3, dans lequel la détermination (S502) du paramètre de charge de l'unité CC-CC pour l'unité de stockage d'énergie sur la base de la différence de tension comprend :
si la différence de tension entre la tension d'échantillonnage et la tension constante prédéfinie est une valeur négative, la détermination (S604) du fait que le paramètre de charge est supérieur à un paramètre de charge de l'unité CC-CC pour l'unité de stockage d'énergie dans une période précédente.

6. Procédé selon l'une quelconque des revendications 3 à 5, dans lequel la détermination (S502) du paramètre de charge de l'unité CC-CC pour l'unité de stockage d'énergie sur la base de la différence de tension comprend :
la détermination d'un courant de charge cible de l'unité CC-CC pour l'unité de stockage d'énergie sur la base de la différence de tension ; et
à l'aide du courant de charge cible comme paramètre de charge de l'unité CC-CC pour l'unité de stockage d'énergie.

7. Procédé selon la revendication 6, dans lequel la détermination d'un courant de charge cible de l'unité CC-CC pour l'unité de stockage d'énergie sur la base de la différence de tension comprend :
la détermination du courant de charge cible sur la base de la différence de tension et de l'impédance du module de stockage d'énergie.

8. Procédé selon la revendication 6 ou 7, dans lequel la charge (S403) de l'unité de stockage d'énergie à l'aide de la quantité d'électricité de charge reflétée par le paramètre de charge comprend :
la détermination, sur la base du courant de charge cible et d'un courant d'échantillonnage du port d'entrée de l'unité CC-CC, d'un cycle de service PWM de modulation de largeur d'impulsion pour charger l'unité de stockage d'énergie ; et
la charge de l'unité de stockage d'énergie à l'aide du cycle de service PWM.

9. Procédé selon l'une quelconque des revendications 3 à 5, dans lequel la détermination (S502) du paramètre de charge de l'unité CC-CC pour l'unité de stockage d'énergie sur la base de la différence de tension comprend :
la détermination d'une tension de charge cible de l'unité CC-CC pour l'unité de stockage d'énergie sur la base de la différence de tension ; et
à l'aide de la tension de charge cible comme paramètre de charge de l'unité CC-CC pour l'unité de stockage d'énergie.

10. Procédé selon la revendication 9, dans lequel la charge (S403) de l'unité de stockage d'énergie à l'aide de la quantité d'électricité de charge reflétée par le paramètre de charge comprend :
la détermination, sur la base de la tension de charge cible et d'une tension d'échantillonnage du port d'entrée de l'unité CC-CC, d'un cycle de service PWM de modulation de largeur d'impulsion pour charger l'unité de stockage d'énergie ; et
la charge de l'unité de stockage d'énergie à l'aide du cycle de service PWM.

11. Procédé selon l'une quelconque des revendications 3 à 5, dans lequel la détermination (S502) du paramètre de charge de l'unité CC-CC pour l'unité de stockage d'énergie sur la base de la différence de tension comprend :
la détermination, sur la base de la différence de tension, d'un cycle de service PWM pour charger l'unité de stockage d'énergie par l'unité CC-CC ; et
à l'aide du cycle de service PWM comme paramètre de charge de l'unité CC-CC pour l'unité de stockage d'énergie.

12. Procédé selon la revendication 11, dans lequel la charge (S403) de l'unité de stockage d'énergie à l'aide de la quantité d'électricité de charge reflétée par le paramètre de charge comprend :
la charge de l'unité de stockage d'énergie à l'aide du cycle de service PWM.

13. Procédé selon l'une quelconque des revendications 1 à 12, dans lequel la charge (S403) de l'unité de stockage d'énergie à l'aide de la quantité d'électricité de charge reflétée par le paramètre de charge comprend :
la charge, sur la base de la commande en bouche fermée, de l'unité de stockage d'énergie à l'aide de la quantité d'électricité de charge reflétée par le paramètre de charge.

14. Module de stockage d'énergie, comprenant une unité à courant continu-courant continu (CC-CC) et une unité de stockage d'énergie, dans lequel l'unité CC-CC est configurée pour fournir de l'énergie à l'unité de stockage d'énergie à l'aide du procédé selon l'une quelconque des revendications 1 à 13.

15. Dispositif alimenté, comprenant une source d'entrée, une charge et au moins un module de stockage d'énergie selon la revendication 14.
